# EUROPÄISCHE PATENTSCHRIFT

(11) **EP 1 590 557 B1**
(45) Veröffentlichungstag und Bekanntmachung des Hinweises auf die Patenterteilung: **10.12.2008**
(21) Anmeldenummer: 04737242.0
(22) Anmeldetag: 29.01.2004
(51) Int. Cl.: F01N 3/28, B01J 35/04, B21D 53/04, B21D 13/04

(54) **VERFAHREN UND WERKZEUG ZUR HERSTELLUNG VON STRUKTURIERTEN BLECHLAGEN; KATALYSATOR-TRÄGERKÖRPER**
METHOD AND TOOL FOR PRODUCING STRUCTURED SHEET METAL LAYERS, AND CATALYST SUPPORT
PROCEDE ET OUTIL POUR PRODUIRE DES COUCHES DE TOLE STRUCTUREES; CORPS DE SUPPORT DE CATALYSEUR

(30) Priorität: 06.02.2003 DE 10304814
(43) Veröffentlichungstag der Anmeldung: 02.11.2005
(73) Patentinhaber: Emitec Gesellschaft für Emissionstechnologie mbH, 53797 Lohmar (DE)
(72) Erfinder: HODGSON, Jan, 53840 Troisdorf (DE); VOIT, Michael, 51375 Leverkusen (DE)
(74) Vertreter: Kahlhöfer, Hermann
(86) Internationale Anmeldenummer: PCT/EP2004/000788
(87) Internationale Veröffentlichungsnummer: WO 2004/072446

(56) Entgegenhaltungen:
- DE-C- 475 936
- DE-U- 20 117 873
- GB-A- 1 301 667
- GB-A- 1 557 780
- US-A- 3 318 128
- US-A- 4 098 722
- US-A- 4 275 581
- US-A- 4 418 558
- US-A- 5 983 692

## Beschreibung

Die vorliegende Erfindung betrifft ein Verfahren zur Herstellung von mehrfach strukturierten Blechfolien, einen Katalysator-Trägerkörper für Abgasanlagen mobiler Verbrennungskraftmaschinen umfassend mehrfach strukturierte Blechfolien sowie ein Werkzeug zur Herstellung von mehrfach strukturierten Blechfolien.

Bei der Abgasbehandlung von mobilen Verbrennungskraftmaschinen, wie zum Beispiel Otto- und Dieselmotoren, ist es bekannt, Komponenten bzw. Strukturen in der Abgasleitung anzuordnen, die eine relativ große Oberfläche bereitstellen. Diese Komponenten werden üblicherweise mit einer adsorbierenden, katalytisch aktiven oder ähnlichen Beschichtung versehen, wobei aufgrund der großen Oberfläche der Komponenten ein inniger Kontakt mit dem vorbeiströmenden Abgas realisiert wird. Solche Komponenten sind beispielsweise Filterelemente zum Herausfiltern von im Abgas enthaltenen Partikeln, Adsorber zum zumindest zeitlich begrenzten Speichern von im Abgas enthaltenen Schadstoffen (z. B. NOₓ), katalytische Konverter (z. B. Drei-Wege-Katalysator, Oxidationskatalysator, Reduktionskatalysator, etc.), Diffusoren zur Strömungsbeeinflussung bzw. Verwirbelung des hindurchströmenden Abgases, oder auch Heizelemente, die gerade nach dem Kaltstart der Verbrennungskraftmaschine das Abgas auf eine vorgegebene Temperatur erwärmen. Im Hinblick auf die Einsatzbedingungen im Abgassystem eines Automobils haben sich grundsätzlich folgende Trägersubstrate bewährt: keramische Wabenkörper, extrudierte Wabenkörper und Wabenkörper aus Metallfolien. Aufgrund der Tatsache, dass diese Trägersubstrate an ihre Funktionen stets anzupassen sind, sind hochtemperaturfeste und korrosionsbeständige Blechfolien besonders gut geeignet als Ausgangsmaterial zu dienen.

Es ist bekannt, Wabenkörper mit einer Mehrzahl von zumindest teilweise strukturierten Blechfolien herzustellen, die anschließend in ein Gehäuse eingebracht werden und somit einen Trägerkörper bilden, der mit einer oder mehreren der oben genannten Beschichtungen versehen werden kann. Die zumindest teilweise strukturierten Blechfolien werden dabei so angeordnet, dass im wesentlichen parallel zueinander angeordnete Kanäle gebildet sind. Um dies zu gewährleisten, ist beispielsweise ein Teil der Blechfolien mit einer Primärstruktur versehen, welche sich u. a. durch eine regelmäßige, sich wiederholende Struktur auszeichnet, insbesondere eine Art Sinus-Wellung, eine Sägezahn-Struktur, eine Rechteck-Wellung, eine Dreiecks-Wellung, eine Omega-Wellung, od. dgl.. Diese mit einer Primärstruktur versehenen Blechfolien werden dann (ggf. abwechselnd mit glatten Zwischenlagen) aufeinander gestapelt, miteinander verbunden und in ein Gehäuse eingefügt. Auf diese Weise ist ein Wabenkörper gebildet, der im wesentlichen zueinander parallele Kanäle aufweist.

Weiter ist bekannt, eine zweite Struktur in derartige Blechfolien einzubringen, die insbesondere verhindern soll, dass sich unmittelbar nach Eintritt des Abgases in den Wabenkörper eine laminare Strömung ausbildet, wobei ein Gasaustausch von im Zentrum eines solchen Kanals liegenden Bereichen des Teilabgasstroms mit den z. B. katalytisch aktiven Kanalwandbereichen nicht stattfindet. Diese Sekundärstruktur stellt demnach Anströmflächen bereit, die eine Art Verwirbelung der Teilabgasströme im Inneren eines solchen Kanals zur Folge haben. Dies führt zu einer intensiven Mischung der Teilabgasströme selbst, so dass ein inniger Kontakt der im Abgas enthaltenen Schadstoffe mit der Kanalwand gewährleistet ist. Weiterhin ist es möglich, durch derartige Sekundärstrukturen Strömungspassagen quer zum Kanal zu bilden, die einen Gasaustausch von Teilabgasströmen in benachbarten Kanälen ermöglichen. Aus diesem Grund sind Sekundärstrukturen bekannt, die beispielsweise Leitflächen, Mikrostrukturen, Noppen, Vorsprünge, Flügel, Laschen, Löcher oder ähnliches umfassen. Insofern ergibt sich eine deutlich erhöhte Variationsvielfalt bei der Herstellung solcher metallischer Wabenkörper gegenüber solchen aus keramischem Material, da hier eine solch komplexe Kanalwand nicht bzw. mit nur besonders hohem technischen Aufwand realisiert werden kann.

In der GB 1 301 667 A wird eine Vorrichtung offenbart, durch die eine Metallfolie mit einer Wellstruktur einer ersten Entfernung der Wellenberge bzw. Wellentäler hergestellt wird, wobei in einem weiteren Verfahrensschritt diese Entfernung verkleinert wird. Dabei wird die offene Wellenstruktur einseitig geschlossen, indem die Wellentäler zur gegenseitigen Anlage gebracht werden.

Weiterhin ist aus der DE 201 17 873 U ein Wabenkörper bekannt, der aus einer Vielzahl von strukturierten Blechfolien aufgebaut ist Die Struktur ist dort mit Schaufeln ausgeführt, wobei vorgeschlagen wird, das Verhältnis der Strukturweite zu der Strukturhöhe kleiner 2 auszuführen.

Aus der US 4,275,581 A ist ein Werkzeug bekannt, das mittels zueinander verschiebbarer Segmente die Abstände einer in eine Metallfolie eingeprägten Struktur verkleinern kann.

Weiter ist es bei der Abgasbehandlung von besonderem Interesse, dass eine Umsetzung der im Abgas enthaltenen Schadstoffe nahezu unverzüglich nach dem Start des Motors erfolgt. Dabei sollte dies gemäß den gesetzlichen Bestimmungen bzw. Richtlinien mit einer besonders hohen Effektivität stattfinden. Aus diesem Grund wurden in der Vergangenheit immer dünner werdende Metallfolien cingesctzt. Sehr dünne Blechfolien haben zur Folge, dass eine sehr geringe oberflächenspezifische Wärmekapazität vorliegt. D.h., dass dem vorbeiströmenden Abgas relativ wenig Wärme entzogen wird bzw. die Blechfolien selbst relativ schnell eine Temperaturethöhung erfahren. Das ist deshalb wichtig, weil die derzeit im Abgassystem eingesetzten katalytisch aktiven Beschichtungen erst ab einer bestimmten Anspringtemperatur mit der Umsetzung der Schadstoffe beginnt, die in etwa bei Temperaturen von 230° C bis 270° C liegt. Mit dem Ziel, bereits nach wenigen Sekunden die Schadstoffe mit einer mindestens 98 %igen Effektivität umzusetzen, wurden Blechfolien eingesetzt, die eine Foliendicke beispielsweise kleiner 20 µm haben.

Aus den oben genannten Zielsetzungen resultieren jedoch eine Reihe fertigungstechnischer und anwendungstechnischer Probleme. Dis Herstellung derartig filigraner Strukturen, insbesondere der Sekundärstrukturen, erfordert besonders präzise arbeitende Werkzeuge, die üblicherweise sehr teuer sind und demnach lange Standzeiten verwirklichen sollten. Dabei ist zu berücksichtigen, dass einerseits umformende und andererseits ggf. auch trennende Fertigungsschritte bewerkstelligt werden müssen. Um Werkzeugkosten zu sparen, wurden möglichst viele Bearbeitungsschritte in ein Werkzeug integriert, wobei aufgrund der Gestalt der Sekundärstruktur ein zunehmender Verschleiß am Werkzeug festzustellen war. Weiterhin besteht das Problem, dass die relativ dünnen Blechfolien mit einer geeigneten Geschwindigkeit zugeführt werden müssen, nach Möglichkeit ohne einer unerwünschten Kaltverformung ausgesetzt zu werden. Die Kaltverfestigung kann das Umformungsverhalten der Blechfolie negativ beeinflussen. Aufgrund der geringen Materialdicke bestehr zudem die Gefahr, dass verstärkt eine Neigung der Blechfolie zum Knittern bzw. zum Aufrollen festzustellen ist. Die Knitter haben beispielsweise zur Folge, dass unter Umständen Kanäle verstopft werden bzw. Risse gebildet sind, die infolge der hohen thermischen und dynamischen Belastungen später im Abgassystem eines Automobils sich fortpflanzen und somit die strukturelle Integrität des Wabenkörpers gefährden. Weiterhin ist zu berücksichtigen, dass derartig geknitterte oder deformierte Primär- und/oder Sekundärstrukturen sich in einer unerwünschten Weise dem Abgas entgegenstellen, so dass unter Umständen ein erhöhter Staudruck vor dem Wabenkörper festzustellen ist, was ggf. zur Reduzierung der Motorleistung führen kann.

Hiervon ausgehend ist es Aufgabe der vorliegenden Erfindung, die zuvor beschriebenen technischen Probleme zu überwinden. Insbesondere ist es eine Aufgabe, ein Verfahren zur Herstellung von mehrfach strukturierten Blechfolien anzugeben, das kostengünstig ist, bevorzugt kontinuierlich durchführbar ist, eine übermäßige Kaltverfestigung der Blechfolien vermeidet, die Gestaltung unterschiedlichster Sekundärstrukturen erlaubt sowie eine Primärstruktur generiert, die zur Herstellung von in Abgassystemen mobiler Verbrenmmgskraftmaschinen geeignet ist, wobei dieser Trägerkörper einen sehr geringen Strömungswiderstand, insbesondere bei hohen Kanaldichten und integrierter Sekundärstruktur, aufweisen soll. Weiterhin soll ein Werkzeug zur Herstellung mehrfach strukturierter Blechfolien angegeben werden, welches geeignet ist, besonders komplexe und strömungstechnisch günstige Strukturen in dünne Blechfolien einzubringen bzw. zu verändern.

Diese Aufgaben werden gelöst durch ein Verfahren zur Herstellung von mehrfach strukturierten Blechfolien gemäß den Merkmalen des Patentanspruchs 1 sowie einem Werkzeug zur Herstellung von mehrfach strukturierten Blechfolien gemäß den Merkmalen des Patentanspruchs 21. Besonders vorteilhafte Ausgestaltungen sind in den jeweils abhängigen Patentansprüchen beschrieben, wobei die dort offenbarben Merkmale in beliebig sinnvoller Art und Weise miteinander kombiniert werden können.

Das erfindungsgemäße Verfahren zur Herstellung von mehrfach strukturierten Blechfolien umfasst zumindest folgende Schritte:
A) Umformen der Blechfolie, wobei eine Primärstruktur mit einer ersten Primärstruktur-Weite erzeugt wird;
B) Umformen der mit einer Primärstruktur versehenen Blechfolie, wobei eine Sekundärstruktur erzeugt wird;
C) Umformen der strukturierten Blechfolie, so dass eine zweite Primärstruktur-Weite erzeugt wird, die kleiner als die erste Primärstruktur-Weite ist.

Weiterhin werden vor dem Schritt A) mehrere Trennkanten in einen Innenbereich der im wesentlichen ebenen Blechfolie eingebracht (Schritt a)).

Im folgenden werden, um Wiederholungen zu vermeiden, die einzelnen Verfahrensschritte lediglich mit dem entsprechenden Buchstaben bezeichnet.

Zunächst einmal ist festzuhalten, dass sich die Erfindung von dem Gedanken abwendet, aus Kostengründen das Herstellungsverfahren so auszubilden, dass möglichst viele Umformschritte gleichzeitig bzw. in einem Werkzeug stattfinden. Insofern sind die genannten Schritten a), A) bis C) als einzelne, insbesondere unabhängige, getrennt voneinander ablaufende, Verfahrensschritte aufzufassen. Das bedeutet insbesonders auch dass in zeitlicher Abfolge zunächst (nur) die Trennkanten, anschließend die Primärstruktur, danach die Sekundärstruktur und im Anschluss daran die reduzierte Primärstruktur-Weite erzeugt wird. Eine solche sequenzielle, schrittweise Herstellung hat z. B. zur Folge, dass eine frühzeitige Brmüdung der Blechfolie gerade während des Einsatzes im Abgassystem eines Automobils vermieden wird, da Kaltverfestigung infolge hoher Verformungsgrade deutlich weniger auftritt. Dabei ist auch zu berücksichtigen, dass dies eine reduzierte Beanspruchung des Werkzeugs zur Folge hat, so dass dessen Verschleiß der Biege- bzw. Umformkanten deutlich reduziert wird. Dabei ist noch klarzustellen, dass auch bei einem Verfahren zur Herstellung von mehrfach strukturierten Blechfolien mit nur zwei oder drei getrennt ausgeführten Schritten letztendlich eine Blechfolie generiert wird, die eine Primärstruktur mit einer zweiten Primärstruktur-Weite und eine Sekundärstruktur hat. Aus diesem Grund werden letztendlich keine der genannten Arbeitsschritte a), A) bis C) vollkommen weggelassen, sondern miteinander kombiniert bzw. gleichzeitig oder gemeinsam miteinander durchgeführt, beispielsweise in einem Werkzeug.

Im folgenden sollen besonders bevorzugte Varianten des Verfahrens zur Herstellung von mehrfach strukturierten Blechfolien angegeben werden, wobei die in Klammern gesetzten Buchstabenkombinationen kombinierte bzw. gleichzeitig ausgeführte Schritte darstellen: a + A + B + C; (a + A) + B + C; (a + A) + (B + C); a + A + (B + C); (a + A + B) + C; a + (A + B) + C. Hinsichtlich des Schrittes a) sei noch darauf hingewiesen, dass dieser unter Umständen direkt in Schritt B) integriert sein kann, nämlich genau dann, wenn die mit einer Primärstruktur versehene Blechfolie so umgeformt wird, dass es zur Materialtrennung kommt, also die Trennkanten gleichzeitig mit der Sekundärstruktur entstehen. In diesem Fall wären folgende Varianten des Verfahrens besonders bevorzugt: A + a/B + C; (A + a/B) + C, wobei die Bezeichnung "a/B" die gleichzeitige Generierung von Trennkanten und Sekundärstruktur darstellt. Grundsätzlich ist besonders eine zweistufige Gliederung der einzelnen Arbeitsschritte bevorzugt, wobei gerade dann sichergestellt sein sollte, dass die Schritte B) und C) nicht in einem Schritt bzw. in einem Arbeitsvorgang gemeinsam vorgenommen werden sondern vielmehr jeder der Schritte B) und C) in einer anderen Stufe bzw. mit einem anderen Werkzeug bzw. zu einem anderen Zeitpunkt durchgeführt wird.

Zu den Verfahrensschritten ist im einzelnen folgendes anzumerken:
Zu a) Diesbezüglich ist von einer im wesentlichen umformungstechnisch unbehandelten Blechfolie auszugehen, womit gemeint ist, dass diese Blechfolie bevorzugt direkt von einem Coil abgezogen wird. Die Blechfolie umfasst ein temperaturfestes, korrosionsbeständiges Material, vorzugsweise mit relativ hohen Anteilen von Aluminium, Chrom, Molybdän oder gleichwirkenden Bestandteilen. Mit "eben" ist in diesem Zusammenhang gemeint, dass noch keine Struktur eingebracht ist, sich die Blechfolie also im wesentlichen flächig ersteckt. In Anbetracht der Tatsache, dass die Verfahrensschritte zur Herstellung von mehrfach strukturierten Blechfolien zumindest überwiegend kontinuierlich erfolgen, ist hier mit einer Blechfolie eine sogenannte "endlos"-Blechfolie gemeint, also eine Blechfolie, welche noch nicht die Abmessungen aufweist, die sie während ihres Einsatzes letztendlich z. B. als Trägerkörper für katalytisch aktive Beschichtungen hat. Insofern ist das Einbringen von Trennkanten nicht so zu verstehen, dass hier diese "endlose" Blechfolie zurechtgeschnitten wird, vielmehr behält die Blechfolie ihre Länge im wesentlichen bei. Im Gegensatz zum kompletten Abtrennen von Teilbereichen der Blechfolie wird hier vorgeschlagen, in einem Innenbereich mehrere Trennkanten vorzusehen. Das bedeutet, dass zumindest ein Teil der Trennkanten vollständig von dem Material der Blechfolie umgeben sind, also eine Art Schlitz, Riss, Öffnung, Loch od. dgl. gebildet ist. Die Trennkanten sind dabei bevorzugt gemäß einem regelmäßigen Muster angeordnet, z. B in Zeilen, Spalten, mit regelmäßigen Entfernungen zueinander, wobei diese Muster wiederum in Teilabschnitten der Blechfolie unterschiedlich ausgeführt sein können, also z. B. in einem Abschnitt größere Entfernungen zwischen den Trennkanten vorgesehen sind, als in einem anderen.
   Die Trennkanten selbst können unterschiedliche Funktionen haben. So ist es beispielsweise möglich, dass diese Trennkanten einen schonenden Eingriff des Umformwerkzeugs zur Ausbildung der Sekundärstruktur gewährleistet. Weiter kann die Trennkante zur Ausrichtung der Blechfolie gegenüber den nachfolgenden Umformwerkzeugen herangezogen werden. Besonders vorteilhaft ist es jedoch, dass die separate Herstellung besonders präzise ausgerichtete bzw. durchgeführte Trennkanten zur Folge haben. Auf diese Weise werden Knitter bzw. Deformierungen der Blechfolie bei nachfolgenden Bearbeitungsschritten vermieden.
Zu A) Das Umformen der Blechfolie, so dass eine Primärstruktur mit einer ersten Primärstruktur-Weite erzeugt wird, erfolgt bevorzugt kontinuierlich. Zur Herstellung einer solchen Primärstruktur bieten sich insbesondere die Fertigungsverfahren Wellwalzen oder Walzbiegen an. Bei diesen Biegeumformverfahren werden rotierende bzw. drehende Profilwalzen eingesetzt, die ineinander eingreifen, wobei die Blechfolie durch sie hindurchgeführt wird. Beim Wellwalzen befindet sich die Blechfolie während des Umformvorgangs stets in Kontakt mit den Flanken beider, ineinander greifender Profilzähne, während beim Wellbiegen meist nur ein beidseitiger Kontakt im Bereich des Profilzahnfußes bzw. Profilzahnkopfes stattfindet. Dabei wird jeweils eine Primärstruktur generiert, deren Biegeebene im wesentlichen senkrecht zur Achse der rotierenden Werkzeuge steht. Die Durchführung dieses Verfahrensschrittes erfolgt dabei in der Weise, dass während der Umformung der Blechfolie keine bzw. sehr geringe Zugkräfte in die Blechfolie eingeleitet werden, der Umformungsvorgang also im wesentlichen auf eine reine Biegung zurückzuführen ist. Dies wird beispielsweise dadurch erreicht, dass zwischen den formgebenden Werkzeugen ein Spalt vorgesehen ist, durch den die Blechfolie hindurchgeführt wird, der ein Ausmaß hat, welches größer als die Dicke der Blechfolie ist. Dadurch kann verhindert werden, dass die Blechfolie an einer Stelle eingeklemmt und so das Hindurchführen behindert wird. Das hat zur Folge, dass die umgeformte Blechfolie keine Materialschäden aufweist, die gerade beim Einsatz als Katalysator-Trägerkörper einen vorzeitigen Ausfall verursachen könnten. Die bevorzugte Durchführung von Umformvorgängen ohne die Einbringung von Zugkräften ist insbesondere auch bei wenigstens einem der folgenden Schritte B) und C) zu beachten bzw. durchzuführen.
Zu B) Gemäß dem Schritt B wird die bereits vorbehandelte, mit einer Primärstruktur versehene Blechfolie nun mit einer Sekundärstruktur versehen. Die Sekundärstruktur überlagert die Primärstruktur, d. h. mit anderen Worten, dass sie die Primärstruktur lokal begrenzt abwandelt bzw. auflöst. So ist es beispielsweise möglich, dass die Primärstruktur zumindest teilweise wieder rückgängig gemacht, durch eine andere ersetzt und/oder verstärkt wird. Als ein Unterscheidungskriterium zwischen Primärstruktur und Sekundärstruktur kann deren Lage bzw. Position an bzw. in der Blechfolie dienen. Üblicherweise lässt sich die Primärstruktur einfach durch Betrachten der Kante der Blechfolie erkennen, die parallel zur Richtung der "endlos" verlaufenden Blechfolie sich erstreckt. An dieser Kante ist üblicherweise die Grundform bzw. die Primärstruktur deutlich erkennbar. Die Sekundärstruktur hingegen ist dagegen häufig einfacher an den senkrecht dazu verlaufenden Kanten der Metallfolie als Abwandlung der im wesentlichen gerade verlaufenden Kante sichtbar, wobei dies insbesondere bei intermittierenden, also sich lokal immer wiederholenden Sekundärstrukturen zutrifft.
Zu C) In dem hier genannten Umformschritt wird die Primärstruktur der nun bereits mit zwei Strukturen versehenen Blechfolie erneut bearbeitet. Dieser Umformschritt hat zur Folge, dass die Primärstruktur danach eine zweite Primärstruktur-Weite hat, die kleiner als die erste Primärstruktur-Weite nach dem Umformschritt A) ist. Mit anderen Worten bedeutet dies, dass die Struktur zusammengestaucht, gerafft, dichter gedrängt, ineinandergeschoben od. dgl. wird. Unter einer Primärstruktur-Weite wird hier die Entfernung von zwei benachbart zueinander angeordneten, gleichgerichteten Extrema der Struktur verstanden. Ist die Primärstruktur beispielsweise eine Wellung mit Hochpunkten und Tiefpunkten, so ist die Primärweite die Entfernung zweier Hochpunkte, die im Verlauf der Wellung direkt hintereinander folgen. Die Reduzierung der Primärstruktur-Weite hat insbesondere zur Folge, dass die Extrema dichter zusammenrücken, wobei die zwischen den Extrema liegenden Blechfolienbereiche steiler abfallen bzw. aufsteigen.
   Die Herstellung der Primärstruktur in zwei Schritten hat gerade auch im Hinblick auf die Überlagerung mit der Sekundärstruktur deutliche Vorteile. Gerade bei sehr geringen Primärstruktur-Weiten sind bei der gleichzeitigen Erzeugung von Primärstruktur und Sekundärstruktur sehr filigrane Werkzeuge erforderlich, da die Sekundärstruktur überwiegend im Bereich der Extrema der Primärstruktur angeordnet ist. Kleine Primärstruktur-Weiten haben auch relativ räumlich eng begrenzte Extrema zur Folge, so dass an den schlanken Stirnseiten der filigranen Werkzeuge zusätzliche Trenn- oder Umformschritte durchzuführen sind. Dies führt zu einem erhöhten Verschleiß der Werkzeugstirnseiten und birgt aufgrund der hohen Umformgrade in der Blechfolie die Gefahr des Knitterns. Infolge des nachträglichen Raffens bzw. Zusammenschiebens der Primärstruktur können massivere Werkzeuge zur Herstellung der Sekundärstruktur zum Einsatz gelangen, wobei deren Standzeiten deutlich höher sind, also deutlich mehr Blechfolien mit demselben Werkzeug bearbeitet werden können.

Gemäß einer weiteren Ausgestaltung des Verfahrens wird vorgeschlagen, dass das Einbringen der Trennkanten mit Hilfe zumindest einem der folgenden Fertigungsverfahren
A) Schneiden,
B) Drücken,
C) Stanzen,
D) Bohren,
E) Ätzen
bewirkt wird, wobei eine Mehrzahl von Durchlässen hergestellt werden. Zur Klarstellung sei hier angemerkt, dass die Durchlässe von den Trennkanten zumindest teilweise begrenzt sind. Dabei sind mit Durchlässen bevorzugt im wesentlichen abgerundete Konturen gemeint, wie beispielsweise runde, elliptische oder ähnliche, relativ große, Löcher. Die Durchlässe weisen bevorzugt eine größte Distanz bezüglich gegenüberliegenden Trennkanten im Bereich von 0,2 bis 6 mm auf. Insbesondere in Abhängigkeit des Materials der Blechfolie, der Größe der Durchlässe bzw. deren Anzahl ist es vorteilhaft, eines der zuvor genannten Verfahren auszuwählen.

Beim Schneiden wird die Blechfolie mittels eines Schneidstempels mit Schneidkräften beaufschlagt, wobei auf der dem Schneidstempel abgewandten Seite eine Schneidplatte vorgesehen ist, in die der Schneidstempel eindringen kann. Bei Steigerung der auf die Blechfolie wirkenden Kraft dringt der Schneidstempel in dieses ein, wobei das Material plastisch verformt wird. Wenn das Fließvermögen des Materials in der Scherzone erschöpft ist, entstehen in der Regel von der Schneidplatte ausgehende Risse, die zur Werkstofftrennung durch Bruch und somit zur Ausbildung von Trennkanten führen.

Beim Drücken wird im wesentlichen vom gleichen Prinzip Gebrauch gemacht, jedoch kann beim Drücken nicht nur ein Durchlass, sondern ggf. auch ein Kragen nahe der Trennkante gebildet werden. Der Unterschied zwischen Schneiden und Stanzen ist darin zu sehen, dass beim Stanzen bevorzugt ein hohler Schneidstempel gewählt wird und der Trennvorgang auf einer im wesentlichen ebenen Schneidplatte durchgeführt wird, in die der Schneidstempel nicht eindringt.

Bei dickeren Materialien bzw. für den Fall, dass mehrere Blechfolien gemeinsam miteinander mit Trennkanten versehen werden sollen, kann auch das Fertigungsverfahren Bohren mit rotierendem Werkzeug eingesetzt werden.

Sollen besonders kleine Durchlässe, insbesondere bei sehr dünnen Folien, erzeugt werden, kann dies beispielsweise auch durch eine Lochmaske generiert werden, die auf die Blechfolie aufgelegt wird, wobei durch diese Lochfolie ein ätzendes Medium auf die Blechfolie aufgebracht werden kann, die eine chemische Zersetzung der Blechfolie in einem gewünschten Bereich zur Folge hat.

Diesbezüglich sei angemerkt, dass der Fachmann die hier benannten Fertigungsverfahren kennt und in der Lage ist, anwendungsspezifisch ein geeignetes Fertigungsverfahren A bis E auszuwählen.

Gemäß einer weiteren Ausgestaltung wird vorgeschlagen, dass die Blechfolie während des ersten Umformschrittes A) mittels ineinandergreifender Profilzähne so gebogen wird, dass als Primärstruktur eine im wesentlichen regelmäßige, sich wiederholende Wellung erzeugt wird. Diese ineinandergreifenden Profilzähne sind bevorzugt Teil rotierender Werkzeuge, die nach dem Fertigungsverfahren Wellwalzen bzw. Wellbiegen die Primärstruktur herstellen. Bevorzugt ist dabei eine im wesentlichen sinusförmige Ausgestaltung der Wellung.

Weiter wird vorgeschlagen, dass die Schritte a) und A) mittels einem ersten Werkzeug durchgeführt werden, wobei der Schritt a) bevorzugt das Fertigungsverfahren Schneiden umfasst und/oder die Primärstruktur in Schritt A) durch das Fertigungsverfahren Wellwalzen erzeugt wird. Die hier vorgeschlagene Kombination der Verfahrensschritte a) und A) ist insbesondere aus kosten- und zeittechnischen Gesichtspunkten von besonderem Interesse. Beide Schritte fordern keinen Umformungsgrad der Blechfolie, der bereits zu einer Knitterneigung führen würde, so dass hier trotz der gleichzeitigen Durchführung hohe Genauigkeiten und keine unerwünschte Zerstörung der Blechfolie bewirkt wird.

Nach einer weiteren Ausgestaltung des Verfahrens wird während des zweiten Umformschrittes B) eine Sekundärstruktur erzeugt, die eine Sekundärstruktur-Weite hat, die kleiner als eine erste Primärstruktur-Weite ist, insbesondere kleiner als 80 %, vorzugsweise kleiner 55 %. Das bedeutet, dass sich die Sekundärstruktur nicht über eine gesamte Primärstruktur-Weite erstreckt, wobei hier festzuhalten ist, dass die Primärstruktur-Weite und die Sekundärstruktur-Weite parallel zueinander angeordnet sind. Dabei sind insbesondere Sekundärstrukturen gemeint, die separate Anströmkanten, Leitflächen, Flügelchen od. dgl. bilden.

Gemäß noch einer weiteren Ausgestaltung ist die Sekundärstruktur streifenförmig ausgebildet, wobei diese sich bevorzugt entlang von Extrema der Primärstruktur erstreckt. Derartige, streifenförmig ausgebildeten Sekundärstrukturen, die sich entlang der Extrema bzw. Hochpunkte oder Tiefpunkte erstrecken, dienen beispielsweise zur Erhöhung der strukturellen Integrität, zur Einstellung von Positionen benachbart zueinander angeordneter Metallfolien oder zur Definition von Beschichtungsbereichen.

Weiter ist es auch vorteilhaft, wenn die Sekundärstruktur intermittierend ausgebildet ist, wobei sie sich bevorzugt parallel zu Extrema der Primärstruktur erstreckt. Das bedeutet, dass sich auf einem Extrema der Primärstruktur mehrere, insbesondere eine Vielzahl von Sekundärstrukturen befinden, die bevorzugt mit gleichbleibendem Abstand zueinander angeordnet sind. Unter einer parallelen Anordnung wird dabei sowohl die Anordnung direkt entlang der Extrema als auch parallel dazu in einem Bereich der Blechfolie zwischen benachbarten Extrema verstanden. Solche intermittierend ausgebildeten Sekundärstrukturen dienen insbesondere der Beeinflussung von Teilabgasströmen, wenn eine solche Blechfolie zur Herstellung eines Katalysator-Trägerkörpers eingesetzt wird.

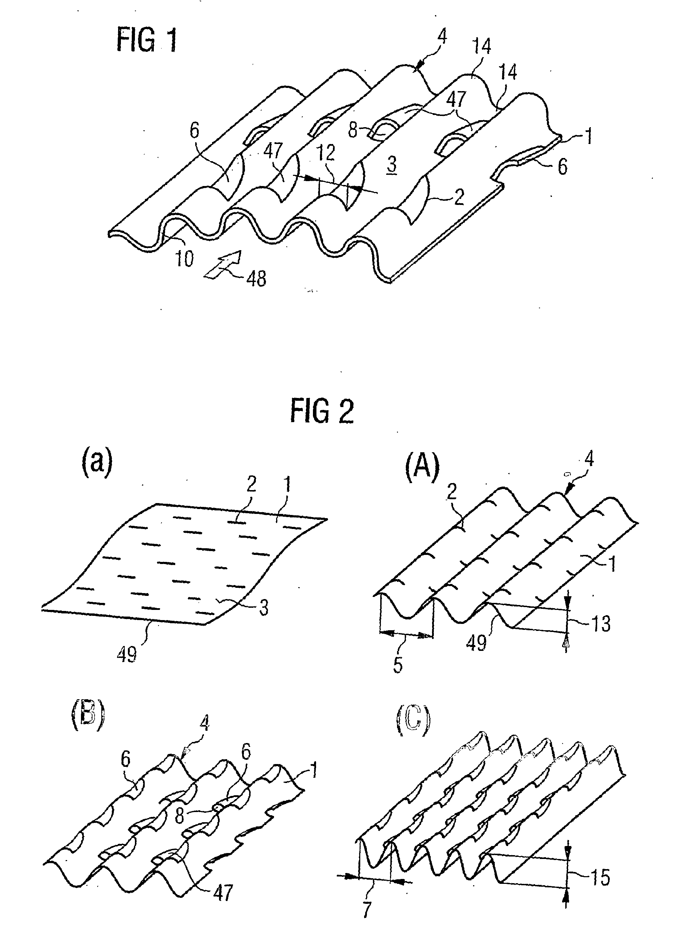

Gemäß einer weiteren Ausgestaltung des Verfahrens wird die Sekundärstruktur so gestaltet, dass diese Durchlässe in der Blechfolie bildet. Das kann einerseits bedeuten, dass die Sekundärstruktur zumindest zum Teil von den Durchlässen begrenzt ist, allerdings ist auch möglich, dass sich die Durchlässe in einem inneren Bereich der Sekundärstruktur befinden. Zur Veranschaulichung sei dabei auf eine Sekundärstruktur hingewiesen, wie sie beispielsweise in der Fig. 1 dargestellt ist. Die dort gezeigte Sekundärstruktur ist als Leitfläche ausgebildet, wobei diese einen Durchlass bildet. In diesem Fall ist von einem Durchlass zu sprechen, der die Sekundärstruktur zumindest teilweise begrenzt. Ein Durchlass in der Sekundärstruktur selbst würde vorliegen, wenn die dargestellte Leitfläche nochmals mit einem Loch od. dgl. versehen ist. Im Hinblick auf das Fertigungsverfahren ist es dabei möglich, dass die während des Schrittes a) erzeugten Trennkanten die Löcher darstellen, die letztendlich in der Leitfläche selbst vorhanden sind, während bei der Generierung der Sekundärstruktur selbst ein weiterer, nämlich der in Fig. 1 dargestellte Durchlass gebildet wird.

Gemäß einer weiteren vorteilhaften Ausgestaltung des Verfahrens liegt nach dem Umformschritt C) eine zweite Primärstruktur-Weite vor, die kleiner als 80 %, insbesondere 60 %, der ersten Primärstruktur-Weite ist. Weiterhin ist es auch vorteilhaft, dass nach dem Umformschritt C) eine erste Primärstruktur-Höhe vorliegt, die kleiner als 80 %, insbesondere 60 %, der zweiten Primärstruktur-Höhe ist. Anhand der Veränderung der Primärstruktur-Weite bzw. der Primärstruktur-Höhe lässt sich der Grad der Umformung bestimmen. Dabei kann entsprechend der gewünschten zweiten Primärstruktur-Weite bzw. zweiten Primärstruktur-Höhe prozentual die gleiche oder jeweils eine unterschiedliche prozentuale Veränderung stattfinden.

Gemäß einer weiteren vorteilhaften Ausgestaltung des Verfahrens greifen während dem Umformschritt C) Segmente eines zweiten Werkzeugs in durch die Extrema gebildete Primärstruktur ein. Das bedeutet insbesondere, dass hier eine geführte Komprimierung bzw. Reduzierung der Primärstruktur-Weite stattfindet. Dies ermöglicht eine besonders schonende Umformung der Blechfolie.

Weiter wird vorgeschlagen, während dem Umformschritt B) gleichzeitig den Umformschritt C) durchzuführen, bevorzugt mittels nur eines zweiten Werkzeugs. Dies ist aus ähnlichen Gesichtspunkten vorteilhaft, wie die Zusammenlegung der Verfahrensschritte a) und A). Insoweit sei auf die Erläuterungen oben verwiesen.

Gemäß noch einer weiteren Ausgestaltung des Verfahrens werden die mehrfach strukturierten Blechfolien aus einem hochtemperaturfesten und korrosionsbeständigen Material mit einer Foliendicke kleiner 0,05 mm hergestellt, insbesondere kleiner 0,03 mm, bevorzugt kleiner 0,015 mm, Weiterhin ist das hier vorgeschlagens Verfahren insbesondere vorteilhaft bei der Horstellung mehrfach strukturierter Blechfolien mit einer ersten Primärstruktur-Weite kleiner 3 mm, insbesondere kleiner 2,6 mm, bevorzugt kleiner 2,2 mm. Weiterhin ist das Verfahren bevorzugt einsetzbar zur Herstellung mehrfach strukturierter Blechfolien mit einer zweiten Primärstruktur-Höhe größer 1,5 mm, insbesondere größer 1,8 mm, bevorzugt größer 2,0 mm. Die hier aufgeführten Parameter beschreiben insbesondere mehrfach strukturierte Blechfolien, die zur Herstellung von Trägerkörpern unterschiedlichster Beschichtungen in Abgassystemen mobiler Verbrennungskraftmaschinen eingesetzt werden.

Vorteilhaft ist die Erfindung zur Herstellung eines Trägerkörpers für Abgasanlagen mobiler Verbrennungskraftmaschinen, der wenigstens einem Wabenkörper mit einer Mehrzahl von zumindest teilweise strukturierten Blechfolien sowie ein Gehäuse umfasst, wobei der Wabenkörper mindestens eine mehrfach strukturierts Blechfolie mit einer Primärstruktur und einer Sekundärstruktur aufweist. Der Trägerkörper kann so ausgeführt werden, dass die Primärstruktur ein Verhältnis von einer Primärstruktur-Weite zu einer. Primärstruktur-Höhe von kleiner 2 hat, insbesonders kleiner 1,5. Dabei sind die mehrfach strukturierten Blechfolien insbesondere nach einer der oben geschilderten Ausgestaltungen des Verfahrens zur Herstellung einer mehrfach strukturierten Blechfolie hergestellt.

Wie bereits eingangs erläutert, weisen derartige Trägerkörper üblicherweise eine Mehrzahl von im wesentlichen parallel zueinander angeordneten Kanälen auf, die für ein Abgas durchströmbar sind. Zur Bildung derartiger Kanäle werden eine Mehrzahl von strukturierten und/oder glatten. Blechfolien miteinander verbunden und in ein Gehäuse eingefügt. Dabei können die Blechfolien spiralig aufgewickelt werden, oder zunächst zu Stapeln formiert und anschließend S-förmig oder in einer ähnlichen Weise geschlungen angeordnet werden. Die aneinanderliegenden Blechfolien bilden dabei bei einer stirnseitigen Ansicht üblicherweise zumindest im Eingangsbereich abgeschlossene Kanäle mit einer bestimmten Querschnittsform. Diese Querschnittsform der Kanäle ist grundsätzlich frei wählbar, wobei der Flächeninhalt bzw. der Kanaldurchmesser stark von der gewünschten Kanaldichte abhängig ist. Unter Kanaldichte wird hierbei die Anzahl der Kanäle pro Einheitsquerschnittsfläche des Trägerkörpers verstanden. Üblicherweise liegen die Kanaldichten in einem Bereich größer 200 cpsi, insbesondere 400 cpsi und bevorzugt 600 cpsi. Die Einheit "cpsi" bedeutet "cells per square inch", wobei 1 cpsi etwa einem Kanal pro 6,4516 cm² entspricht.

Eine weitere Möglichkeit zur Beschreibung der Kanäle ist über die Angabe von Parametern der sie begrenzenden Blechfolie möglich. Hier wird vorgeschlagen, dass die Primärstruktur-Weite zu der Primärstruktur-Höhe in einem Verhältnis kleiner 2 vorliegt. D. h., dass die Primärstruktur-Weite höchstens doppelt so groß ist wie die Primärstruktur-Höhe. Liegt eine derartige Ausgestaltung der Primärstruktur dar, so sind relativ schlanke Kanäle gebildet, mit anderen Worten liegen die Extrema der Primärstruktur relativ dicht beieinander. Das bedeutet auch, dass die Bereiche der Blechfolie zwischen den Extrema relativ steil verlaufen.

Das hat insbesondere zur Folge, dass nahe den Kontaktbereichen der benachbarten Blechfolien nur sehr kleine Zwickel gebildet werden. Diese Zwickel werden bei der Herstellung von Trägerkörpern bevorzugt zur gleichmäßigen Verteilung von Lotmaterial verwendet. Dazu wird der Wabenkörper in seiner gewünschten Gestalt stirnseitig in ein flüssiges Lotmittel getaucht, wobei das Lotmittel in den Zwickel aufgrund einer Kapillarwirkung auch gegen die Schwerkraft durch den gesamten Wabenkörper hindurch die Zwickel benetzt, soweit keine Passivierungsmittel vorgesehen sind, die diese Kapillarwirkung unterbrechen. Die hier vorgeschlagene Ausgestaltung der Primärstruktur hat nun die Folge, dass die Kapillare sehr klein sind, also nur eine relativ geringe Menge Lotmittel sich nahe den Kontaktbereichen der benachbart zueinander angeordneten Blechfolien ansammelt. Dadurch wird letztendlich eine geringere Menge des Lotmittels im Inneren des Wabenkörpers verteilt. Dies hat neben Vorteilen hinsichtlich der Kosten auch noch den positiven Effekt, dass so mit hoher Prozesssicherheit ein Wabenkörper bzw. ein Trägerkörper hergestellt werden kann, der besonders lange Lebenszeiten auch unter extrem korrosionsfördemden Bedingungen aufweist. Ursache dafür ist, dass die geringe Menge Lotmittel die Blechfolien nicht angreift, was üblicherweise infolge der Affinität zu Legierungselementen der Blechfolie stattfindet und somit lokal zu einer Verarmung an Legierungsmittel der Blechfolie führen kann. Dieser Effekt, der noch deutlich verstärkt in den Vordergrund tritt, wenn Blechfolien mit einer geringen Foliendicke, beispielsweise kleiner 20 µm, eingesetzt werden, wird durch die hier vorgeschlagenen mehrfach strukturierten Blechfolien vermieden.

Die kleineren Zwickel haben aber nicht nur bei der Verbindungstechnik einen vorteilhaften Effekt, vielmehr kann auf diese Weise auch die Menge der Beschichtung auf dem Trägerkörper reduziert werden. Die Beschichtung wird in ähnlicher Weise wie das flüssige Lotmittel auf der Oberfläche der Trägerstruktur aufgetragen. Aufgrund der kleineren Kapillare reicht auch hier eine reduzierte Menge an beispielsweise Washcoat und katalytisch aktiven Elementen (Platin, Rhodium, etc.) aus, wobei dennoch eine gleichmäßig dünne Beschichtung erzeugt und gleichzeitig die Effektivität bezüglich der Umsetzung von im Abgas enthaltenen Schadstoffen nicht beeinträchtigt wird.

Vielmehr ergibt sich aus den oben genannten Effekten ein weiterer, nämlich ein verringerter Druckverlust bzw. Staudruck vor der Trägerstruktur. Die Tatsache, dass sowohl weniger Lotmittel als auch Beschichtung in den Kanälen positioniert sind, hat einen größeren frei durchströmbaren Querschnitt des Kanals bei gleicher Kanaldichte zur Folge. Das bedeutet auch, dass die z. B. in den Kanal hinein ragende Sekundärstruktur weniger belastet wird, also länger den Umgebungsbedingungen im Abgassystem von Automobilen standhält. Dabei wird der intensive Kontakt des Abgases mit der katalytisch aktiv beschichteten Kanalwand neben der Sekundärstruktur auch durch die relativ schlanke Ausgestaltung des Kanals unterstützt. Ursache dafür ist die Tatsache, dass jeder Teilabgasstrom im Inneren eines solchen Kanals relativ dicht an einer bzw. zwei gegenüberliegenden, nahezu parallelen bzw. in einem flachen Winkel zueinander verlaufenden Kanalwänden vorbeiströmt. Dies erhöht wesentlich die Wahrscheinlichkeit des Kontaktes der im Abgas enthaltenen Schadstoffe mit den Katalysatoren zu deren Umsetzung.

Gemäß noch einem weiteren Aspekt der Erfindung wird ein Werkzeug zur Herstellung von mehrfach strukturierten Blechfolien vorgeschlagen, wobei dem Werkzeug eine Blechfolie mit einer Primärstruktur zuführbar ist. Dabei hat das Werkzeug Segmente, die mit einem Abstand, und bevorzugt parallel, zueinander in Richtung der Primärstruktur angeordnet sind, wobei das Werkzeug Mittel zur Veränderung des Abstandes umfasst. D. h. mit anderen Worten, dass das Werkzeug zur Aufnahme bzw. Führung einer bereits vorstrukturierten Blechfolie geeignet ist. Die Aufnahme bzw. Führung, die hier mit Segmenten ausgebildet ist, dient u. a. der Fortbewegung bzw. dem Transport der Blechfolie durch das Werkzeug hindurch. Wie bereits oben mit Bezug auf das Verfahren beschrieben, formt dieses Werkzeug die bereits strukturierte Blechfolie derart um, dass eine zweite Primärstruktur-Weite erzeugt wird, die kleiner als die erste Primärstruktur-Weite der bereits strukturierten Blechfolie ist. Dabei werden die hier genannten Segmente in Eingriff mit der bestehenden Primärstruktur gebracht, d. h. insbesondere, dass die Segmente mit einer Mehrzahl der Extrema in Kontakt ist, insbesondere mit jedem Extrema einer Ausrichtung (also z. B. Wellenberge bzw. Wellentäler) in einem bestimmten Abschnitt der Blechfolie oder bevorzugt mit jedem Extrema der Primärstruktur (also Wellenberge und Wellentäler) in einem Abschnitt der Blechfolie. Insbesondere ist es vorteilhaft, die Segmente von beiden Seiten der Blechfolie mit der Primärstruktur in Eingriff zu bringen, da auf diese Weise eine besonders symmetrische Beanspruchung bzw. gleichmäßige Umformung bewirkt wird, wobei dieser Effekt in besonderem Maße erfüllt ist, wenn die Segmente alternierend von verschiedenen Seiten mit einem Hochpunkt und einem benachbarten Tiefpunkt jeweils in Kontakt sind.

Zur Reduzierung der Primärstruktur-Weite sind die Segmente variabel bezüglich ihrer Ausrichtung zueinander im Werkzeug angeordnet. Die Funktion des variablen Abstandes wird nun bei einer besonderen Ausführungsform des Werkzeuges kurz erläutert. Betrachtet man ein solches Werkzeug, welches z.B. eine im wesentlichen ebene Platte umfasst, auf der die gewellte Blechfolie entlang gleitet, und solche Segmente jeweils (nur) von oben in die Wellentäler der Primärstruktur der Blechfolie eingreifen, so haben diese im wesentlichen einen Abstand, welcher der ersten Primärstruktur-Weite der Blechfolie entspricht. Nun werden mit Hilfe verschiedener Mittel wie beispielsweise einem Antrieb, Federn, einer Führung oder Anschlägen die Segmente aufeinander zubewegt, so dass sich deren Abstand zueinander reduziert. In dem hier geschilderten Fall, in dem der erste Absand im wesentlichen der ersten Primärstruktur-Weits entspricht, erfolgt die Reduzierung des Abstandes in gleichem Maße, wie die gewünschte Reduzierung der Primärstruktur-weite. D.h. mit anderen Worten, dass nach dem Umformschritt die Segmente zueinander einen Abstand aufweisen, der der zweiten Primärstruktur-Weite im wesentlichen entspricht. Anhand dieses Beispiels wird klar, dass bei einer Anordnung der Segmente vor dem Umformschritt mit einem Vielfachen der ersten Primärstruktur-Weite bzw. einem Bruchteil der ersten Primärstruktur-Weite auch nur eine entsprechende Variierung der Abstände zueinander erfolgt.

Auf diese Weise können insbesondere Blechfolien bzw. Trägerkörper mit besonders steilen Kanalwänden erzielt werden, die die bereits oben erläuterten Vorteile aufweisen. Dabei ist eine solche goführte teilweise formschlüssige Reduzierung der Primärstruktur-Weite besonders schonend, so dass sich dieser Umformschritt gerade für besonders dünne Blechfolien, insbesondere mit einer Foliendicke kleiner 30 µm, einsetzten lässt.

Zudem weist das Werkzeug, bevorzugt zumindest einen Teil der Segmente, mindestens ein Prägeelement zur Erzeugung einer Sekundärstruktur in die bereits mit einer Primärstruktur versehene Blechfolie auf. Das bedeutet, dass das hier beschriebene Werkzeug in der Lage ist, die oben mit B) und C) genannten Verfahrensschritte, insbesondere gleichzeitig, durchzuführen. Dies gilt insbesondere für den Fall, dass die Sekundärstrukturen im Bereich der Extrema der Primärstruktur angeordnet sind, da in diesem Bereich bereits ein Kontakt der Segmente mit der Blechfolie realisiert ist. Das Prägeelement selbst kann als Vorsprung, Noppe oder andere Materialethebung des Werkzeugs bzw. des Segmentes ausgebildet sein; es ist aber auch möglich, einen speziellen Stift, Bolzen, Stempel oder ein ähnliches Element vorzusehen, welches eine Relativbewegung gegenüber dem Segment erlaubt. Das bedeutet, dass beispielsweise in einem ersten Schritt die Segmente mit der Primärstruktur in Eingriff gelangen, dann die Stempel verfahren werden, um die Sekundärstruktur zu bilden, und anschließend eine Reduzierung der Primärstruktur-Weite der Blechfolie erfolgt.

Gemäß einer Weiterbildung des Werkzeuges ist der Abstand zwischen den Segmenten um mindestens 15 %, insbesondere mindestens 25 % und bevorzugt sogar um mindestens 35 % verringerbar. D. h. mit anderen Worten, dass sich die Segmente während des Umformschrittes sufeinander zubewegen können, wobei ein höheres Maß an Verringerung des Abstandes gleichzeitig eine stärkere Umformung der strukturierten Blechfolie bewirkt, so dass insbesondere auch deutlich kleinere Verhältnisse von der zweiten Primärstruktur-Weite zur zweiten Primärstruktur-Höhe produzierbar sind, z. B. im Bereich von 1,0 bis 1,3.

Gemäß einer vorteilhaften Ausgestaltung des Werkzeuges weisen die Segmente über ihre Erstreckung den gleichen Abstand zueinander auf. D. h., dass z. B. die Mittelachsen der Segmente zueinander parallel angeordnet sind und somit den gleichen Abstand zueinander aufweisen. Dabei sind die Segmente bevorzugt so ausgerichtet, dass die Mittelachsen senkrecht zur Blechfolie im Kontaktbereich orientiert sind.

Die Erfindung wird nachfolgend mit Bezug auf die Figuren näher erläutert. Dabei sei darauf hingewiesen, dass die Figuren besonders bevorzugte Ausführungsbeispiele darstellen, die Erfindung jedoch nicht auf diese begrenzt ist.

Es zeigen:
- Fig. 1:: Eine erste Ausführungsform einer mehrfach strukturierten Blechfolie;
- Fig. 2:: schematisch den Ablauf eines Herstellungsverfahrens für eine mehrfach strukturierte Blechfolie;
- Fig. 3:: eine schematische und perspektivische Darstellung einer Ausführungsform eines ersten Werkzeugs zur Erzeugung einer Primärstruktur in eine Blechfolie;
- Fig. 4:: schematisch eine Abgasanlage eines Automobils;
- Fig. 5:: schematisch und perspektivisch ein Ausführungsbeispiel eines Trägerkörpers zur Reinigung von Abgasen; und
- Fig. 6:: schematisch eine Darstellung eines zweiten Werkzeugs zur Reduzierung der Primärstruktur-Weite.

Fig. 1 zeigt schematisch und perspektivisch ein Ausführungsbeispiel einer mehrfach strukturierten Blechfolie 1. Die dargestellte Blechfolie 1 weist eine Primärstruktur 4 auf, die hier die Form einer Wellung 10 hat. Diese Wellung 10 ist insbesondere sinusförmig ausgebildet und weist verschiedene Extrema 14 auf, wobei einem Wellenberg ein Wellental nebengeordnet ist. Zusätzlich zu dieser Wellung 10 weist die Blechfolie 1 eine Sekundärstruktur 6 auf. Diese ist hier mit einer Leitfläche 47 gebildet, die teilweise von einem Durchlass 8 begrenzt ist. Die Leitfläche 47 bzw. die Durchlässe 8 weisen Trennkanten 2 auf. Die Sekundärstruktur 6 ist mit einer Sekundärstruktur-Weite 12 ausgeführt, die kleiner als eine erste Primärstruktur-Weite ist, also die Weite zweier benachbarter Wellenberge der Primärstruktur.

Bei der dargestellten Blechfolie 1 sind zeilenweise verschiedene Orientierungen der Sekundärstruktur 6 gewählt. Während die in Fig. 1 unten dargestellten Sekundärstrukturen 6 so gestaltet sind, dass deren Leitflächen 47 ausgehend vom oberen Extremum 14 bzw. dem Wellenberg nach unten gebogen sind, weisen die in Fig. 1 oben dargestellten Sekundärstrukturen 6 eine entgegengesetzte Ausrichtung der Leitflächen 47 auf und sind ausgehend von den unteren Extrema 14 bzw. den Wellentälern nach oben gerichtet. Dadurch wird erreicht, dass später in jedem Kanal derartige Sekundärstrukturen 6 hineinragen und eine Verwirbelung bzw. Abschälung von Teilabgasströmen bewirken. Zur Erläuterung wurde dabei der Pfeil 48 dargestellt, der eine Strömungsrichtung des Abgases symbolisiert. Strömt das Abgas also durch Kanäle, die durch eine so gebildete Blechfolie 1 begrenzt sind, so werden die Teilabgasströme von den Leitflächen 47 durch die Durchlässe 8 hindurch geleitet bzw. abgeschält, und gelangen somit in benachbarte Kanäle. Auf diese Weise sind sogenannte kommunizierende Kanäle gebildet, die eine relativ hohe Effektivität hinsichtlich der katalytischen Umsetzung von Abgasen ermöglichen.

Fig. 2 zeigt schematisch eine Ausgestaltung eines Verfahrens zur Herstellung von mehrfach strukturierten Blechfolien. Der mit a) gekennzeichnete Schritt umfasst das Einbringen von mehreren Trennkanten 2 in einen Innenbereich 3 der im wesentlichen ebenen Blechfolie 1. In der dargestellten Ausführungsform sind die Trennkanten 2 im wesentlichen parallel zur Kante 49 der Blechfolie 1 angeordnet, dies ist aber nicht zwingend der Fall. Die Trennkanten 2 können in beliebiger Anordnung zueinander vorgesehen werden. Die Trennkanten 2 sind hier nicht in Form von Löchern od. dgl. dargestellt, sondern als Schlitze oder ähnliches. Während des Schrittes A) wird die Blechfolie 1 erstmalig umgeformt, wobei eine Primärstruktur 4 mit einer ersten Primärstruktur-Weite 5 erzeugt wird. Demnach wurde die bereits mit Trennkanten 2 versehene Blechfolie 1 beispielsweise durch Wellwalzen mit der Primärstruktur versehen. Die Primärstruktur lässt sich einfach an der Kante 49 erkennen, wobei zwei gleichartige, benachbarte Extrema die erste Primärstruktur-Weite 5 beschreiben. Als weiteres Kriterium für die Beschreibung der Primärstruktur 4 ist die Primärstruktur-Höhe, wobei hier nach dem ersten Umformschritt eine erste Primärstruktur-Höhe 13 vorliegt und in dieser Phase das Verhältnis der ersten Primärstruktur-Weite 5 zur ersten Primärstruktur-Höhe 13 2,5 oder größer beträgt.

In einem weiteren Umformschritt B) wird die Sekundärstruktur 6 in die Blechfolie 1 eingebracht. Die dargestellte Sekundärstruktur 6 weist wiederum Durchlässe 8 und Leitflächen 47 auf, die entgegengesetzt ausgerichtet sind. Die Primärstruktur 6 überlagert die Primärstruktur 1.

In einem weiteren Umformschritt C) wird die Primärstruktur 1 gerafft bzw. so umgeformt, dass eine zweite Primärstruktur-Weite 7 erzeugt wird, die kleiner als die erste Primärstruktur-Weite 5 ist. In der Darstellung ist zu erkennen, dass durch die Reduzierung der Primärstruktur-Weite eine entsprechende Vergrößerung der Primärstruktur-Höhe zur Folge hat, also die ersten Primärstruktur-Höhe 13 kleiner als die zweiter Primärstruktur-Höhe 15 ist. Mit dem hier gezeigten Verfahren zur Herstellung von mehrfach strukturierten Blechfolien sind Blechfolien 1 mit einer Primärstruktur 4 herstellbar, welche ein Verhältnis von einer zweiten Primärstruktur-Weite 7 zu einer zweiten Primärstruktur-Höhe 15 von kleiner 2 aufweist.

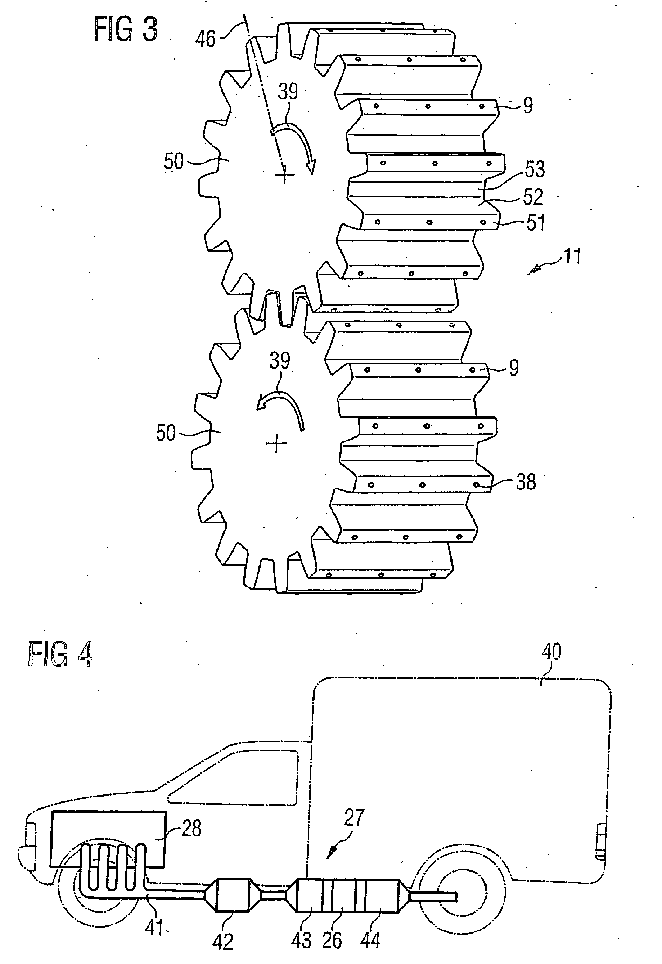

Fig. 3 zeigt schematisch und perspektivisch ein erstes Werkzeug 11, welches insbesondere zur Erzeugung einer Primärstruktur 4 mit einer ersten Primärstruktur-Weite 5 eingesetzt wird. Das erste Werkzeug 11 umfasst zwei Walzen 50 mit Profilzähnen 9, wobei die Walzen 50 so angeordnet sind, so dass die Profilzähne 9 der beiden Walzen 50 ineinander eingreifen. Die anfangs im wesentlichen ebene bzw. flächige Blechfolie wird nun zwischen den im Eingriff befindlichen Profilzähnen 9 der Walzen 50 hindurchgeschoben, wobei die Blechfolie in unterschiedliche Richtungen gebogen wird. Dabei werden zwischen einem Kopf 51 der einen Walze 50 und dem Fuß 52 der anderen Walze 50 die Extrema der Blechfolie gebildet. Zwischen dem Kopf 51 der Profilzähne 9 und dem Fuß 53 weist der Profilzahn 9 eine Flanke 52 auf, die beispielsweise parallel zur Mittelachse 46 ausgerichtet oder aber evolventenförmig gestaltet sein kann.

Die (hier nicht dargestellte) Blechfolie 1 wird durch die Drehbewegung der Walzen 50 selbst oder durch eine separate Zuführvorrichtung durch die Walzen 50 hindurchgeführt. Die hier dargestellten Walzen 50 weisen auf den Köpfen 51 der Profilzähne 1 weiterhin Stifte 38 auf, die gleichzeitig beim Kontakt mit der Blechfolie 1 die Trennkanten 2 in die Blechfolie 1 einbringen. Dies findet insbesondere dann statt, wenn der Kopf 51 eines Profilzahns 9 der einen Walze unmittelbar einem Fuß 52 der anderen Walze 50 gegenübersteht. Dabei werden die Trennkanten 2 entweder komplett durchgängig, d. h. durch das ganze Material der Blechfolie 1 hindurch eingebracht, es ist jedoch auch möglich, das Material nur anzuritzen, d. h. die Trennkanten 2 nur über einen Teil der Foliendicke auszuführen.

Fig. 4 zeigt schematisch ein Ausführungsbeispiel einer Abgasanlage 27 eines Automobils 40. Das in der Verbrennungskraftmaschine 28 erzeugte Abgas wird über eine Abgasleitung 41 verschiedenen Komponenten zur Reinigung des Abgases zugeführt. In der dargestellten Abgasanlage 27 folgen in Strömungsrichtung des Abgases nacheinander ein Startkatalysator 42, der bereits nach sehr kurzer Zeit nach einem Kaltstart der Verbrennungskraftmaschine 28 mit der Umsetzung von Schadstoffen beginnt, ein Filter 43 zum Sammeln von im Abgas enthaltenen Partikeln, ein Katalysator-Trägerkörper 26, der mit der hier beschriebenen Blechfolie 1 versehen ist, und einen abschließenden katalytischen Konverter 44, insbesondere einem Drei-Wege-Katalysator.

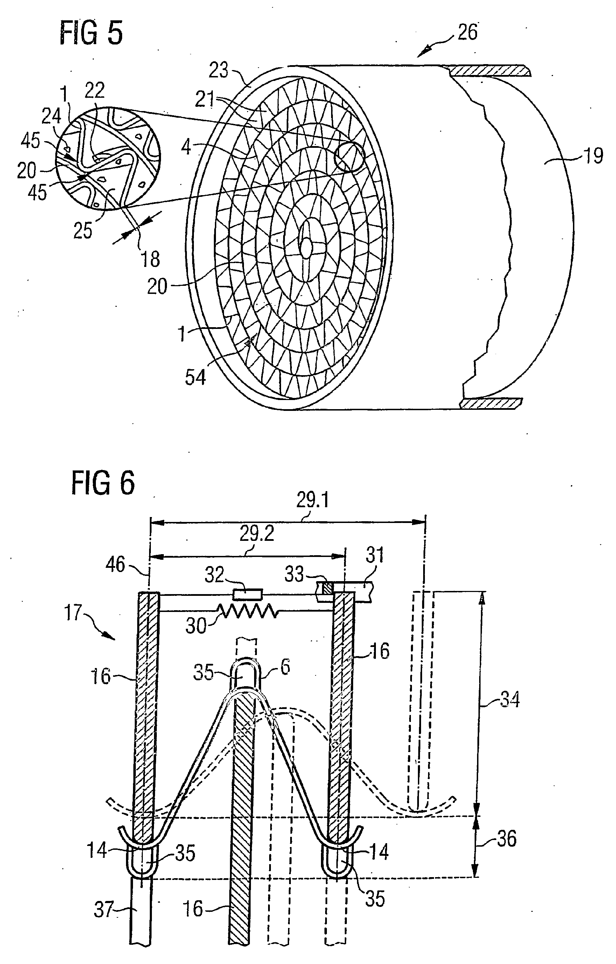

Fig. 5 zeigt schematisch und perspektivisch eine Ausführungsform eines Trägerkörpers 26. Der Trägerkörper 26 umfasst wenigstens einen Wabenkörper 19 mit einer Mehrzahl von zumindest teilweise strukturierten Blechfolien 1, 20 sowie ein Gehäuse 23, wobei der Wabenkörper mindestens eine mehrfach strukturierte Blechfolie 1 mit einer Primärstruktur 4 und einer Sekundärstruktur 6 aufweist. Die Primärstruktur 4 ist sehr deutlich bei einer Ansicht des Trägerkörpers 26 von der Stirnseite 54 erkennbar. In der dargestellten Ausführungsform ist eine mehrfach strukturierte Blechlage 1 gemeinsam mit einer glatten Zwischenlage 20, die bevorzugt ebenfalls eine Blechfolie ist, spiralförmig zu einem zylindrischen Wabenkörper aufgerollt. Grundsätzlich sind jedoch andere Querschnittsformen des Wabenkörpers 19 möglich, wie beispielsweise polygonale oder ellipsoide Körperformen. Durch die benachbarte Anordnung der Blechfolie 1 und der Zwischenlage 20 werden Kanäle 21 gebildet, die im wesentlichen parallel zueinander angeordnet sind und sich bevorzugt über die gesamte Länge des Wabenkörpers 19 hin erstrecken. Die durch die Blechfolien 1, 20 gebildeten Wände der Kanäle 21 sind mit einer katalytisch aktiven Beschichtung 24 versehen, wobei die Beschichtung 24 Washcoat 25 und darin imprägnierte Edelmetalle umfasst. In der vergrößert dargestellten Detailansicht sind zudem die Zwickel 45 zu erkennen, die ggf. bei der Verbindungstechnik der Blechfolien 1 und Zwischenlagen 20 sowie einem nachfolgenden Beschichtungsvorgang eine zentrale Rolle spielen.

In der Ansicht weisen die mehrfach strukturierten Blechfolien 1 eine im wesentlichen wellenförmige Primärstruktur 4 auf, wobei diese hier zu Anschauungszwecken relativ flach ausgebildet ist. Als Sekundärstruktur 6 sind hier u. a. Öffnungen 22 vorgesehen, die es ermöglichen, dass durch den Wabenkörper 19 hindurchströmendes Abgas von einem ersten Kanal 21 hinüber zu einem anderen Kanal 21 strömen kann. Der Wabenkörper 19 weist dabei bevorzugt eine Kanaldichte von mehr als 300 cpsi, insbesondere mehr als 650 cpsi auf, wobei die mehrfach strukturierte Blechfolie 1 und auch die Zwischenlage 20 eine Foliendicke 18 aufweisen, die etwa im Bereich von 0,01 bis 0,05 mm liegt.

Fig. 6 zeigt schematisch den Aufbau eines zweiten Werkzeugs 17 zur Durchführung der Verfahrensschritte B) und C). Dieses Werkzeug 17 dient demnach der Herstellung von mehrfach strukturierten Blechfolien 1, wobei dem Werkzeug eine Blechfolie mit einer Primärstruktur 4 (gestrichelt dargestellt) zugeführt wird. Zu diesem Zeitpunkt greifen die drei dargestellten Segmente 16 in die Primärstruktur 4 der Blechfolie 1 ein, so dass diese mit den Extrema 14 in Kontakt sind. Zur Reduzierung der Primärstruktur weist das Werkzeug 17 verschiedene Mittel auf, die die variable Ausgestaltung des Abstandes 29 zwischen zwei benachbarten Segmenten 16 ermöglichen. In welcher Weise diese Abstände 29 variiert werden, wird nachfolgend erläutert. Bei der dargestellten Ausführungsform sind die Segmente 16 relativ schlank ausgebildet, wobei sie eine Mittelachse 46 definieren. Hier sind die Segmente 16 über ihre gesamte Erstreckung 34 mit dem gleichen Abstand 29 versehen, wobei die Mittelachsen 46 der Segmente 16 im wesentlichen parallel zueinander angeordnet sind. Zur Variation des Abstandes 29 dienen ein Antrieb 32, Federn 30, ggf. auch Dämpfer, eine Führung 31 und ggf. Anschläge 33 zur Begrenzung der Variationsmöglichkeiten.

Wie bereits ausgeführt, wird die Blechfolie 1 mit einer Primärstruktur 4 und einer ersten Primärstruktur-Weite dem Werkzeug 17 zugeführt. Die in Fig. 6 oberhalb dargestellten Segmente 16 greifen dabei in die Tiefpunkte der dargestellten, wellenförmig ausgeprägten Blechfolie 1. Die versetzt dazu angeordneten Segmente 16, die im unteren Bereich der Fig. 6 dargestellt sind, greifen in die Hochpunkte bzw. Wellenberge der Blechfolie 1 ein. Dabei weisen die Segmente 16, die auf einer Seite der Blechfolie 1 angeordnet sind, einen Abstand 29.1 auf, der im wesentlichen der ersten Primärstruktur-Weite 5 entspricht. Beim Reduzieren der Primärstruktur-Weite werden die Segmente 16 gegeneinander so verfahren, dass ein neuer Abstand 29.2 eingestellt wird. Dabei werden die Extrema der Blechfolie 1 näher aneinandergerückt, wobei mit dem Begriff "näher" gemeint ist, dass die Extrema in Richtung der Wellenform dichter aufeinander folgen.

Bei der dargestellten Ausführungsform werden gleichzeitig die Sekundärstrukturen 6 eingebracht. Dies erfolgt in der Weise, dass die Segmente 16 mit Prägeelementen 35 versehen sind, die einen Hub 36 ausführen, wobei sie zumindest teilweise die durch die primär verformte Blechfolie 1 beschriebene Fläche hindurchtreten. Dabei werden die Sekundärstrukturen 6 insbesondere an den Stellen der Blechfolie 1 ausgebildet, an denen zuvor Trennkanten 2 eingebracht wurden. Hierzu ist es ggf. erforderlich, auf der dem Prägeelement 35 abgewandten Seite der Blechfolie 1 eine Form 37 bzw. eine Matrize vorzusehen, die eine entsprechende Ausführung der Sekundärstruktur 6 ermöglicht.

Mit dem zuvor beschriebenen Verfahren zur Herstellung mehrfach strukturierter Blechfolien werden die mit Bezug auf den Stand der Technik beschriebenen Probleme überwunden, und es wird ein kostengünstiges und zudem auch prozesssicheres Verfahren zur Herstellung von extrem dünnen Blechfolien angegeben. Hierzu ist es erforderlich, den Umformprozess von einer im wesentlichen ebenen Blechfolie hin zu einer mehrfach strukturierten Blechfolie in separate Schritte zu unterteilen, um zu verhindern, dass ungewünschte Knitter oder Einrisse in der Blechfolie entstehen. Solche Knitter und Einrisse hätten eine verkürzte Lebensdauer der Blechfolie als Oberflächenbildner im Trägerkörper für Katalysatoren zur Umwandlung von im Abgas enthaltenen Schadstoffen zur Folge. Insofern eröffnet das vorgeschlagene Verfahren insbesondere die Herstellung von speziell geformten Katalysator-Trägerkörpern, die ein Verhältnis von Primärstruktur-Weite zu Primärstruktur-Höhe kleiner 2 aufweisen. Dabei hat sich als besonders vorteilhaft herausgestellt, die Reduzierung der Primärstruktur-Weite mit einem speziellen Werkzeug vorzunehmen, bei dem die Blechfolie über ihre Struktur geführt wird. All diese einzelnen Komponenten führen dazu, dass letztendlich ein Katalysator-Trägerkörper zur Abgasreinigung eingesetzt werden kann, der bereits kurz nach dem Kaltstart des Motors soweit aufgeheizt ist, dass er mit der Umsetzung beginnen kann, einen niedrigen Staudruck verursacht, eine geringe Beschichtungsmenge benötigt und gleichzeitig eine deutlich erhöhte Lebensdauer aufweist.

### Bezugszeichenliste

- 1: Blechfolie
- 2: Trennkante
- 3: Innenbereich
- 4: Primärstruktur
- 5: erste Primärstruktur-Weite
- 6: Sekundärstruktur
- 7: zweite Primärstruktur-Weite
- 8: Durchlass
- 9: Profilzahn
- 10: Wellung
- 11: Primär-Werkzeug
- 12: Sekundärstruktur-Weite
- 13: erste Primärstruktur-Höhe
- 14: Extremum
- 15: zweite Primärstruktur-Höhe
- 16: Segment
- 17: Sekundär-Werkzeug
- 18: Foliendicke
- 19: Wabenkörper
- 20: Zwischenlage
- 21: Kanal
- 22: Öffnung
- 23: Gehäuse
- 24: Beschichtung
- 25: Wash-Coat
- 26: Trägerkörper
- 27: Abgasanlage
- 28: Verbrennungskraftmaschine
- 29: Abstand
- 30: Feder
- 31: Führung
- 32: Antrieb
- 33: Anschlag
- 34: Erstreckung
- 35: Prägeelement
- 36: Hub
- 37: Form
- 38: Stift
- 39: Drehrichtung
- 40: Automobil
- 41: Abgasleitung
- 42: Startkatalysator
- 43: Filter
- 44: Konverter
- 45: Zwickel
- 46: Mittelachse
- 47: Leitfläche
- 48: Pfeil
- 49: Kante
- 50: Walze
- 51: Kopf
- 52: Flanke
- 53: Fuß

## Patentansprüche

1. Verfahren zur Herstellung von mehrfach strukturierten Blechfolien (1), welches zumindest folgende Schritte umfasst:
A) Umformen der Blechfolie (1), wobei eine Primärstruktur (4) mit einer ersten Primärstruktur-Weite (5) erzeugt wird;
B) Umformen der mit einer Primärstruktur (4) versehenen Blechfolie (1), wobei eine Sekundärstruktur (6) erzeugt wird;
C) Umformen der strukturierten Blechfolie (1), so dass eine zweite Primärstruktur-Weite (7) erzeugt wird, die kleiner als die erste Primärstruktur-Weite (5) ist,
wobei vor dem Schritt A) mehrere Trennkanten (2) in einen Innenbe-reich (3) der im wesentlichen ebenen Blechfolie (1) eingebracht werden.

2. Verfahren nach Anspruch 1, bei dem das Einbringen der Trennkanten (2) mit Hilfe zumindest einem der folgenden Fertigungsverfahren
A) Schneiden,
B) Drücken,
C) Stanzen,
D) Bohren,
E) Ätzen
bewirkt wird, wobei eine Mehrzahl von Durchlässen (8) hergestellt werden.

3. Verfahren nach einem der vorhergehenden Ansprüche, bei dem die Blechfolie (1) während des ersten Umformschrittes A) mittels ineinandergreifender Profilzähne (9) so gebogen wird, dass als Primärstruktur (4) eine im wesentlichen regelmäßige, sich wiederholende Wellung (10) erzeugt wird.

4. Verfahren nach einem der vorhergehenden Ansprüche, bei dem das Einbringen der Trennkannten (2) und Schritt A) mittels einem ersten Werkzeug (11) durchgeführt werden, wobei das Einbringen der Trennkanten (2) bevorzugt das Fertigungsverfahren Schneiden umfasst und/oder die Primärstruktur (4) in Schritt A) durch das Fertigungsverfahren Wellwalzen erzeugt wird.

5. Verfahren nach einem der vorhergehenden Ansprüche, bei dem der zweite Umformschritt B) eine Sekundärstruktur (6) erzeugt, die eine Sekundärstruktur-Weite (12) hat, die kleiner als eine erste Primärstruktur-Weite (13) ist, insbesondere kleiner als 80%, vorzugsweise kleiner 55%.

6. Verfahren nach einem der vorhergehenden Ansprüche, bei dem die Sekundärstruktur (6) streifenförmig ausgebildet ist, wobei sie sich bevorzugt entlang von Extrema (14) der Primärstruktur (4) erstreckt.

7. Verfahren nach einem der vorhergehenden Ansprüche, bei dem die Sekundärstruktur (6) intermittierend ausgebildet ist, wobei sie sich bevorzugt parallel zu Extrema (14) der Primärstruktur (4) erstreckt.

8. Verfahren nach einem der vorhergehenden Ansprüche, bei dem die Sekundärstruktur (6) so gestaltet wird, dass diese Durchlässe (8) in der Blechfolie (1) bildet.

9. Verfahren nach einem der vorhergehenden Ansprüche, bei dem nach dem Umformschritt D) eine zweite Primarstruktur-Weite (7) vorliegt, die kleiner als 80%, insbesondere 60%, der ersten Primärstruktur-Weite (5) ist.

10. Verfahren nach einem der vorhergehenden Ansprüche, bei dem nach dem Umformschritt C) eine erste Primärstruktur-Höhe (13) vorliegt, die kleiner als 80%, insbesondere 60%, der zweiten Primärstrulctur-Höhe (15) ist.

11. Verfahren nach einem der vorhergehenden Ansprüche, bei dem während dem Umformschritt C) Segmente (16) eines zweiten Werkzeugs (17) in durch die Extrema (14) gebildete Primärstruktur (4) eingreifen.

12. Verfahren nach einem der vorhergehenden Ansprüche, bei dem während dem Umformschritt B) gleichzeitig der Umformschritt C) erfolgt, bevorzugt mittels nur eines zweiten Werkzeugs (17).

13. Verfahren nach einem der vorhergehenden Ansprüche, bei dem mehrfach strukturierte Blechfolien (1) aus einem hochtemperaturfesten und korrosionsbeständigem Material mit einer Foliendicke (18) kleiner 0,05 mm hergestellt werden, insbesondere kleiner 0,03 mm, bevorzugt kleiner 0,015 mm.

14. Verfahren nach einem der vorhergehenden Ansprüche, bei dem mehrfach strukturierte Blechfolien (1) mit einer zweiten Primärstruktur-Wcite (7) kleiner 3,0 mm hergestellt werden, insbesondere kleiner 2,6 mm, bevorzugt kleiner 2,2 mm.

15. Verfahren nach einem der vorhergehenden Ansprüche, bei dem mehrfach strukturierte Blechfolien (1) mit einer zweiten Primärstruktur-Höhe (15) größer 1,5 mm hergestellt werden, insbesondere größer 1,8 mm, bevorzugt größer 2,0 mm.

16. Verfahren zur Herstellung eines metallischen Wabenkörpers (19), wobei dieser zumindest teilweise strukturierte Blechfolien (1, 20) umfasst, bei dem wenigstens eine Blechfolie (1) nach einem der vorhergehenden Ansprüche hergestellt wird und die Blechfolien (1, 20) anschließend so gestapelt und/oder gewunden werden, dass ein Wabenkörper (19) mit einer Vielzahl von Kanälen (21) gebildet sind, die zumindest teilweise durch die Primärstruktur (4) begrenzt sind.

17. Verfahren nach Anspruch 16, bei dem die Sekundärstruktur (6) so gestaltet ist, dass Öffnungen (22) hin zu benachbarten Kanälen (21) gebildet sind.

18. Verfahren nach Anspruch 16 oder 17, bei dem die Blechfolien (1, 20) so gestapelt und/oder gewunden werden, dass eine Kanaldichte pro Einheitsfläche von mindestens 300 cpsi erzeugt wird, insbesondere von mindestens 600 cpsi.

19. Verfahren nach einem der Ansprüche 16 bis 18, bei dem die den Wabenkörper (19) bildenden Blechfolien (1, 20) miteinander und/oder mit einem den Wabenkörper (19) zumindest teilweise umgebenden Gehäuse (23) fügetechnisch verbunden werden, insbesondere mit einem Lötverfahren.

20. Verfahren nach einem der Ansprüche 16 bis 19, bei dem die den Wabenkörper (19) bildenden Blechfolien (1, 20) zumindest teilweise mit einer Beschichtung (24) versehen wird, die vorzugsweise katalytisch aktiv ist und insbesondere Wash-Coat (25) umfasst.

21. Werkzeug (17) zur Herstellung von mehrfach strukturierten Blechfolien (1), wobei dem Werkzeug (17) eine Blechfolie (1) mit einer Primärstruktur (4) zuführbar ist und das Werkzeug (17) Segmente (16) bat, die mit einem Abstand (29), und bevorzugt parallel, zueinander in Richtung der Primärstruktur (4) angeordnet sind und das Werkzeug (17) Mittel (30, 31, 32, 33) zur Veränderung des Abstandes (29) umfasst und **dadurch gekennzeichnet ist, dass** das Werkzeug (17), bevorzugt zumindest ein Teil der Segmente (16), mindestens ein Prägeelement (35) zur Erzeugung einer Sekundärstruktur (6) in die bereits mit einer Primärstruktur (4) versehene Blechfolie (1) aufweist.

22. Werkzeug (17) nach Anspruch 21, **dadurch gekennzeichnet, dass** der Abstand (29) zwischen den Segmenten (16) um mindestens 15 %, insbesondere mindestens 25 % und bevorzugt sogar um mindestens 35 %, verringerbar ist.

23. Werkzeug (17) nach Anspruch 21 oder 22, **dadurch gekennzeichnet, dass** die Segmente (16) über ihre Erstreckung (34) den gleichen Abstand (29) zueinander aufweisen.

## Claims

1. A method for producing multiple-structured sheet metal foils (1), comprising at least the following steps:
A) forming of the sheet metal foil (1), thereby producing a primary structure (4) having a first primary structure width (5);
B) forming of the sheet metal foil (1) provided with a primary structure (4), thereby producing a secondary structure (6);
C) forming of the structured sheet metal foil (1), so that a second primary structure width (7) is produced, which is less than the first primary structure width (5),
in which prior to step A) multiple separating edges (2) are introduced into an inner area (3) of the basically plane sheet metal foil (1).

2. The method as claimed in claim 1, in which the introduction of the separating edges (2) is achieved using at least one of the following production methods
A) Cutting,
B) Pressing,
C) Stamping,
D) Drilling,
E) Etching,
thereby producing a multiplicity of passages (8).

3. The method as claimed in one of the preceding claims, in which during the first forming step A) the sheet metal foil (1) is bent by means of intermeshing profile teeth (9), so that a basically regular, recurring corrugation (10) is produced as primary structure (4).

4. The method as claimed in one of the preceding claims, in which the introduction of the separating edges (2) and step A) are performed by means of a first tool (11), the introduction of the separating edges (2) preferably comprising the cutting production method and/or the primary structure (4) being produced in step A) by the corrugation rolling production method.

5. The method as claimed in one of the preceding claims, in which the second forming step B) produces a secondary structure (6), which has a secondary structure width (12), which is less than a first primary structure width (13), in particular less than 80%, preferably less than 55%.

6. The method as claimed in one of the preceding claims, in which the secondary structure (6) is of striated design, preferably extending along extremes (14) of the primary structure (4).

7. The method as claimed in one of the preceding claims, in which the secondary structure (6) is of intermittent design, preferably extending parallel to extremes (14) of the primary structure (4).

8. The method as claimed in one of the preceding claims, in which the secondary structure (6) is designed so that it forms passages (8) in the sheet metal foil (1).

9. The method as claimed in one of the preceding claims, in which after the forming step D) a second primary structure width (7) is existent which is less than 80%, in particular 60%, of the first primary structure width (5).

10. The method as claimed in one of the preceding claims, in which after the forming step C) a first primary structure height (13) is existent which is less than 80%, in particular 60%, of the second primary structure height (15).

11. The method as claimed in one of the preceding claims, in which during the forming step C) segments (16) of a second tool (17) engage with the primary structure (4) formed by the extremes (14).

12. The method as claimed in one of the preceding claims, in which the forming step C) is performed simultaneously during the forming step B), preferably by means of just one second tool (17).

13. The method as claimed in one of the preceding claims, in which multiple-structured sheet metal foils (1) are produced from a high temperature-resistant and corrosion-resistant material having a foil thickness (18) of less than 0.05 mm, in particular less than 0.03 mm, preferably less than 0.015 mm.

14. The method as claimed in one of the preceding claims, in which multiple-structured sheet metal foils (1) are produced having a second primary structure width (7) of less than 3.0 mm, in particular less than 2.6 mm, preferably less than 2.2 mm.

15. The method as claimed in one of the preceding claims, in which multiple-structured sheet metal foils (1) are produced having a second primary structure height (15) of more than 1.5 mm, in particular more than 1.8 mm, preferably more than 2.0 mm.

16. A method for producing a metal honeycomb body (19) comprising at least partially structured sheet metal foils (1, 20), in which at least one sheet metal foil (1) is produced according to one of the preceding claims and the sheet metal foils (1, 20) are subsequently stacked and/or wound so that a honeycomb body (19) is formed having a plurality of ducts (21) which are at least partially defined by the primary structure (4).

17. The method as claimed in claim 16, in which the secondary structure (6) is designed so that openings (22) to adjacent ducts (21) are formed.

18. The method as claimed in claim 16 or 17, in which the sheet metal foils (1, 20) are stacked and/or wound so that a duct density per unit area of at least 300 cpsi, in particular of at least 600 cpsi, is produced.

19. The method as claimed in one of claims 16 to 18, in which the sheet metal foils (1, 20) forming he honeycomb body (19) are joined to one another and/or to a casing (23) at least partially enclosing the honeycomb body (19), in particular by a brazing method.

20. The method as claimed in one of claims 16 to 19, in which the sheet metal foils (1, 20) forming the honeycomb body (19) are at least partially provided with a coating (24), which is preferably catalytically active and in particular comprises a wash coat (25).

21. A tool (17) for producing multiple-structured sheet metal foils (1), whereby a sheet metal foil (1) having a primary structure (4) can be fed to the tool (17) the tool (17) having segments (16), which are arranged at a distance (29) and preferably parallel to one another in the direction of the primary structure (4), the tool (17) comprising means (30, 31, 32, 33) for varying the distance (29), **characterized in that** the tool (17), preferably at least some of the segments (16), having at least one embossing element (35) for producing a secondary structure (6) in the sheet metal foil (1) which is already provided with a primary structure (4).

22. The tool (17) as claimed in claim 21, **characterized in that** the distance (29) between the segments (16) can be reduced by at least 15%, in particular at least 25% and preferably even by at least 35%.

23. The tool (17) as claimed in claim 21 or 22, **characterized in that** the segments (16) have the same distance (29) to each other over their extent (34).

## Revendications

1. Procédé destiné à la fabrication de couches de tôle structurées de façon multiple (1) qui comprend au moins les étapes suivantes :
A) Transformation de la feuille de tôle (1), une structure primaire (4) avec une première extension de structure primaire (5) étant générée ;
B) transformation de la feuille de tôle (1) dotée d'une structure primaire (4), une structure secondaire (6) étant générée ;
C) transformation de la feuille de tôle structurée (1), de sorte qu'une deuxième extension de structure primaire (7) soit générée, qui est plus petite que la première extension de structure primaire (5),
avant l'étape A) plusieurs arêtes de séparation (2) étant introduites dans une région interne (3) de la feuille de tôle (1) sensiblement plane.

2. Procédé selon la revendication 1, dans lequel l'introduction des arêtes de séparation (2) est effectuée à l'aide d'au moins un des procédés de fabrication suivants :
A) le coupage
B) la pression
C) le poinçonnage
D) le perçage
E) le mordançage,
une pluralité de passages (8) étant fabriquée.

3. Procédé selon l'une des revendications précédentes, dans lequel la feuille de tôle (1) est courbée de telle façon au moyen de dents de profil (9) s'engrenant les unes dans les autres durant la première étape de transformation A), qu'une ondulation sensiblement régulière, se répétant (10) est générée en tant que structure primaire (4).

4. Procédé selon l'une des revendications précédentes, dans lequel l'introduction des arêtes de séparation (2) et l'étape A) sont effectuées au moyen d'un premier outil (11), l'introduction des arêtes de séparation (2) comprenant de préférence le procédé de fabrication coupage et/ou la structure primaire (4) dans l'étape A) étant générée par le procédé de fabrication roulage à ondulation.

5. Procédé selon l'une des revendications précédentes, dans lequel la deuxième étape de transformation B) génère une structure secondaire (6) qui a une extension de structure secondaire (12) qui est plus petite qu'une première extension de structure primaire (13), notamment plus petite que 80 %, de préférence plus petite que 55 %.

6. Procédé selon l'une des revendications précédentes, dans lequel la structure secondaire (6) est réalisée en forme de bandes, dans quel cas elle s'étend de préférence le long d'extréma (14) de la structure primaire (4).

7. Procédé selon l'une des revendications précédentes, dans lequel la structure secondaire (6) est réalisée de façon intermittente, dans quel cas elle s'étend de préférence parallèlement par rapport à des extréma (14) de la structure primaire (4).

8. Procédé selon l'une des revendications précédentes, dans lequel la structure secondaire (6) est façonnée de telle manière que celle-ci forme des passages (8) dans la feuille de tôle (1).

9. Procédé selon l'une des revendications précédentes, dans lequel après l'étape de transformation D) une deuxième extension de structure primaire (7) se présente qui est plus petite que 80 %, notamment 60 % de la première extension de structure primaire (5).

10. Procédé selon l'une des revendications précédentes, dans lequel après l'étape de transformation C) il existe une première hauteur de structure primaire (13) qui est plus petite que 80 %, notamment 60 % de la deuxième hauteur de structure primaire (15).

11. Procédé selon l'une des revendications précédentes, dans lequel durant l'étape de transformation C) des segments (16) d'un deuxième outil (17) s'engrènent dans la structure primaire (4) formée par les extréma (14).

12. Procédé selon l'une des revendications précédentes, dans lequel durant l'étape de transformation B) l'étape de transformation C) a lieu en même temps, de préférence au moyen d'un deuxième outil (17).

13. Procédé selon l'une des revendications précédentes, dans lequel on fabrique des feuilles de tôle structurées de façon multiple (1) d'un matériau résistant aux températures élevées et à la corrosion avec une épaisseur de feuille (18) plus petite que 0,05 mm, notamment plus petite que 0,03, de préférence plus petite que 0,015 mm.

14. Procédé selon l'une des revendications précédentes, dans lequel des feuilles de tôle structurées de façon multiple (1) sont fabriquées avec une deuxième extension de structure primaire (7) plus petite que 3,0 mm, notamment plus petite que 2,6 mm, de préférence plus petite que 2,2 mm.

15. Procédé selon l'une des revendications précédentes, dans lequel des feuilles de tôle structurées de façon multiple (1) sont fabriquées avec une deuxième hauteur de structure primaire (15) plus grande que 1,5 mm, notamment plus grande que 1,8 mm, de préférence plus grande que 2,0 mm.

16. Procédé destiné à la fabrication d'un corps en nids d'abeilles (19), celui-ci comprenant des feuilles de tôle au moins partiellement structurées (1, 20), dans lequel au moins une feuille de tôle (1) est fabriquée selon l'une des revendications précédentes et les feuilles de tôle (1, 20) sont ensuite empilées et/ou tordues de manière telle qu'un corps en nids d'abeilles (19) avec une multiplicité de canaux (21) est formé, lesquels canaux sont limités au moins partiellement par la structure primaire (4).

17. Procédé selon la revendication 16, dans lequel la structure secondaire (6) est formée de manière telle que des ouvertures (22) vers des canaux adjacents (21) sont formées.

18. Procédé selon la revendication 16 ou 17, dans lequel les feuilles de tôle (1, 20) sont empilées et/ou tordues de manière telle qu'une densité de canal par surface unitaire d'au moins 300 cpsi est générée, notamment d'au moins 600 cpsi.

19. Procédé selon l'une des revendications 16 à 18, dans lequel les feuilles de tôle (1, 20) formant le corps en nids d'abeilles (19) sont raccordées par technique de jointoiement réciproquement et/ou avec un boîtier (23) entourant au moins partiellement le corps en nids d'abeilles, notamment avec un procédé de brasage.

20. Procédé selon l'une des revendications 16 à 19, dans lequel les feuilles de tôle (1, 20) formant le corps en nids d'abeilles (19) sont dotées au moins partiellement d'un revêtement (24) de préférence à activité catalytique et qui comprend notamment le Washcoat (25).

21. Outil (17) pour fabriquer des feuilles de tôle (1) structurées de façon multiple (1), l'outil (17) pouvant être alimenté par une feuille de tôle (1) ayant une structure primaire (4) et l'outil (17) ayant des segmenfts (16) qui sont agencés avec un écart (29) et de préférence parallèlement les uns par rapport aux autres dans le sens de la structure primaire (4) et l'outil (17) comprenant des moyens (30, 31, 32, 33) pour modifier l'écart (29) et est **caractérisé en ce que** l'outil (17) a de préférence au moins une partie des segments (16), au moins un élément de poinçonnage (35) pour générer une structure secondaire (6) dans la feuille de tôle (1) déjà pourvue d'une structure primaire (4).

22. Outil (17) selon la revendication 21, **caractérisé en ce que** l'écart (29) entre les segments (16) peut être diminué d'au moins 15 %, notamment d'au moins 25 % et de préférence même d'au moins 35 %.

23. Outil (17) selon la revendication 21 ou 22, **caractérisé en ce que** les segments (16) ont - en passant par leur étendue (34) - le même écart (29) l'un par rapport à l'autre.
